# FASCICULE DE BREVET EUROPEEN

(11) **EP 3 051 101 B1**
(45) Date de publication et mention de la délivrance du brevet: **04.12.2019**
(21) Numéro de dépôt: 16153388.0
(22) Date de dépôt: 29.01.2016
(51) Int. Cl.: F02C 7/266, F02P 15/00

(54) **GÉNÉRATEUR D'ALLUMAGE À HAUTE ÉNERGIE NOTAMMENT POUR TURBINE À GAZ**
HOCHENERGIE-ZÜNDUNGANLAGE, INSBESONDERE FÜR GASTURBINE
HIGH ENERGY IGNITION DEVICE FOR A GAS TURBINE

(30) Priorité: 30.01.2015 FR 1550736
(43) Date de publication de la demande: 03.08.2016
(73) Titulaire: Aeva, 16730 Fléac (FR)
(72) Inventeur: GIRARD, Mickael, 16730 FLEAC (FR); GABOREL, Gael, 16730 FLEAC (FR)
(74) Mandataire: Lavoix

(56) Documents cités:
- US-A- 3 515 937
- US-A1- 2013 025 255

## Description

La présente invention concerne un générateur d'allumage à haute énergie notamment pour turbine à gaz.

Plus particulièrement, l'invention se rapporte à un générateur du type comportant une source d'énergie électrique reliée à des moyens de génération d'étincelles entre les électrodes d'une bougie d'allumage de la turbine.

De façon classique, une telle structure comporte un condensateur de stockage d'énergie en série avec une diode et raccordés à la source d'énergie.

Le condensateur est également raccordé à la bougie d'allumage à travers un éclateur à gaz pour se décharger à travers celle-ci et engendrer les étincelles.

Des travaux ont été menés depuis de très nombreuses années pour remplacer cet éclateur à gaz par des organes commutateurs à semi-conducteur commandés, tels que par exemple des thyristors.

Pour avoir une explication des raisons de ces travaux, on pourra par exemple se reporter au document FR 2 636 678.

Entre autres raisons, on notera que les éclateurs à gaz posent des problèmes de vieillissement et de modification de tension d'amorçage.

De plus ils utilisent des gaz contenant des éléments radioactifs.

D'autres problèmes existent et on trouvera un exemple de solution à certains de ceux-ci dans le document FR 2 695 432.

Ce domaine des générateurs d'allumage pour ce type d'applications est un domaine qui a donné lieu à de nombreuses études et de nombreux brevets parmi lesquels on pourra citer les documents US 3 515 937, 5 032 969, 5 053 913, 5 852 381, 6 104 143, 6 191 536, 7 768 767, US 2013/0025255, US 2014/0176003 et WO 2013/164 816.

Mais aucun des systèmes décrits dans ces documents, ne donne entière satisfaction.

On sait en particulier que lorsque l'on remplace l'éclateur à gaz par un organe commutateur à semi-conducteur commandé, on se trouve en face d'un problème appelé emballement thermique.

Il convient de noter à cet égard que les conditions de fonctionnement de ce type de générateurs sont extrêmement difficiles.

En effet, ceux-ci sont placés à proximité de la turbine et se trouvent donc dans un environnement à très haute température de fonctionnement, à savoir plus de 120°C.

Or, les organes commutateurs à semi-conducteur présentent un courant de fuite lors de la charge du condensateur de stockage qui augmente avec leur température de fonctionnement.

L'augmentation du courant de fuite consécutive à l'augmentation de la température de fonctionnement de la turbine et donc du générateur, se traduit par un auto échauffement de l'organe commutateur à semi-conducteur de celui-ci, qui se traduit lui-même par une augmentation des courants de fuite, et ainsi de suite.

Ce phénomène est appelé emballement thermique et se traduit en règle générale par la destruction de l'organe commutateur à semi-conducteur et donc une panne du générateur.

Le but de l'invention est de proposer un tel générateur qui puisse fonctionner à haute énergie, haute température et qui soit extrêmement fiable.

A cet effet, l'invention a pour objet un générateur d'allumage à haute énergie notamment pour turbine à gaz, comportant une source d'énergie électrique reliée à des moyens de génération d'étincelles entre les électrodes d'une bougie d'allumage, caractérisé en ce qu'il comprend une première partie de puissance comportant des premiers moyens formant condensateur de stockage d'énergie en série avec des premiers moyens formant diode, dans laquelle les premiers moyens formant condensateur sont également raccordés à la bougie d'allumage à travers un éclateur à gaz et au moins une deuxième partie de déclenchement comportant des seconds moyens formant condensateur de stockage d'énergie en série avec des seconds moyens formant diode, dans laquelle les seconds moyens formant condensateur sont raccordés à travers au moins un organe commutateur à semi-conducteur commandé, à un enroulement primaire d'un transformateur élévateur de tension dont un enroulement secondaire est raccordé en série avec l'éclateur à gaz entre les premiers moyens formant condensateur et la bougie d'allumage.

Suivant d'autres caractéristiques du générateur selon l'invention, prises seules ou en combinaison :
- l'organe commutateur à semi-conducteur comporte au moins un transistor ;
- l'organe commutateur à semi-conducteur comporte au moins un thyristor ;
- l'organe commutateur à semi-conducteur comporte au moins un élément SIC ;
- la source d'énergie électrique est adaptée pour délivrer une tension d'alimentation d'environ 3000 volts pour la première partie de puissance des moyens de génération et d'environ 1000 volts pour la deuxième partie de déclenchement de celui-ci ;
- la source d'énergie comporte deux sources d'alimentation indépendantes pour la charge des deux moyens formant condensateur ;
- l'éclateur est un éclateur à gaz sans élément radioactif.

L'invention sera mieux comprise à l'aide de la description qui va suivre donnée uniquement à titre d'exemple et faite en se référant aux dessins annexés, sur lesquels :
- la figure 1 représente un schéma synoptique illustrant la structure générale d'un générateur selon l'invention,
- la figure 2 représente une partie de moyens de commutation entrant dans la constitution d'un tel générateur, et
- la figure 3 représente un schéma illustrant l'implantation de ces moyens de commutation dans un générateur selon l'invention.

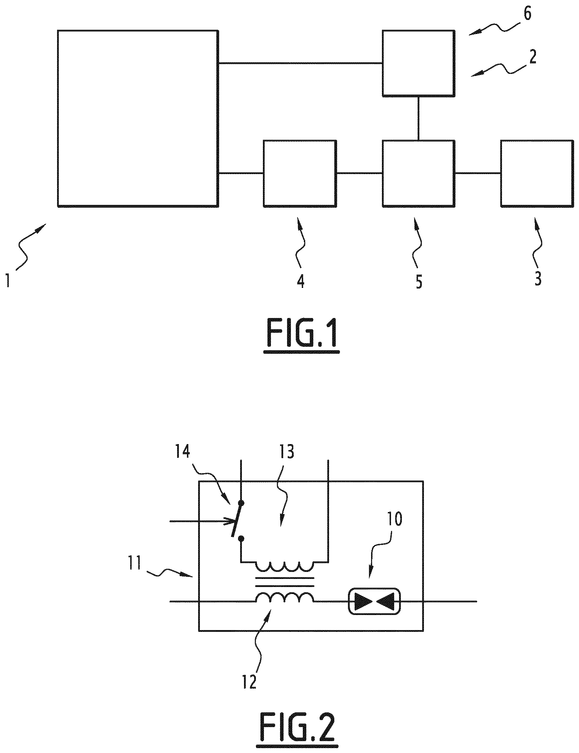

On a en effet illustré sur ces figures et en particulier sur la figure 1, la structure générale d'un générateur d'allumage à haute énergie selon l'invention, notamment pour une turbine à gaz.

Ce générateur comporte de façon classique des moyens formant source d'énergie électrique désignés par la référence générale 1, reliés à des moyens de génération d'étincelles désignés par la référence générale 2, entre les électrodes d'une bougie d'allumage désignée par la référence générale 3.

Comme cela sera décrit plus en détail par la suite, les moyens de génération d'étincelles comportent en fait un circuit de puissance désigné par la référence générale 4, un commutateur hybride à haute température désigné par la référence générale 5, et un circuit de déclenchement de celui-ci désigné par la référence générale 6.

En fait et comme cela est illustré sur la figure 2, dans le commutateur hydride à haute température utilisé dans le générateur selon l'invention, celui-ci comporte deux éléments à savoir d'une part un éclateur à gaz désigné par la référence générale 10 et un transformateur élévateur de tension désigné par la référence générale 11.

L'enroulement secondaire désigné par la référence générale 12 de ce transformateur 11 est connecté en série avec l'éclateur à gaz 10 et l'enroulement primaire désigné par la référence générale 13 de ce transformateur 11, est raccordé à la source d'énergie à travers un organe commutateur à semi-conducteur commandé, désigné par la référence générale 14.

L'éclateur à gaz est de préférence un éclateur à gaz sans élément radioactif.

L'organe commutateur à semi-conducteur commandé peut alors être par exemple un transistor ou un thyristor SiC.

Bien entendu d'autres organes peuvent être envisagés.

La source d'alimentation en énergie électrique est alors adaptée pour délivrer une tension d'alimentation élevée, par exemple d'environ 3000 volts, pour la partie de puissance du circuit et une tension d'alimentation basse, par exemple d'environ 1000 volts, pour la partie de déclenchement de celui-ci.

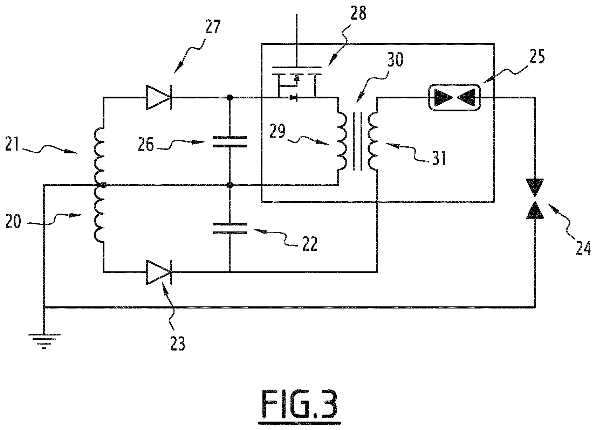

Ceci est visible plus clairement sur la figure 3, où l'on voit que la source d'alimentation en énergie électrique comporte par exemple deux enroulements secondaires de transformateur, désignés par les références 20 et 21 respectivement et délivrant par exemple les tensions élevées de 3000 V et basse de 1000 V respectivement.

Le générateur selon l'invention comporte alors comme cela est illustré sur cette figure 3, une première partie de puissance raccordée au secondaire 20 comprenant des premiers moyens formant condensateur de stockage d'énergie électrique désignés par la référence générale 22, en série avec des moyens formant diode 23.

Ces moyens sont donc alimentés sous la tension élevée de la source.

Les premiers moyens formant condensateur 22 sont également raccordés à une bougie d'allumage désignée par la référence générale 24, à travers un éclateur à gaz désigné par la référence générale 25 et à travers le secondaire du transformateur élévateur de tension désigné par la référence 31.

Le générateur selon l'invention comporte également au moins une deuxième partie de déclenchement comportant des seconds moyens formant condensateur de stockage d'énergie désignés par la référence générale 26.

Ceux-ci sont connectés en série avec des seconds moyens formant diode 27.

Ces moyens sont donc alimentés sous la tension basse de la source.

Dans cette partie de déclenchement, les seconds moyens formant condensateur 26 sont également raccordés à travers un organe commutateur à semi-conducteur commandé désigné par la référence générale 28, à un enroulement primaire 29 d'un transformateur élévateur de tension 30, dont un enroulement secondaire 31 est raccordé en série avec l'éclateur à gaz 25, entre les premiers moyens formant condensateur 22 et la bougie d'allumage 24.

Comme cela a été indiqué précédemment, la source d'alimentation en énergie électrique peut délivrer une tension basse par exemple de 1000 volts pour la partie de déclenchement et une tension élevée par exemple de 3000 volts pour la partie de puissance des moyens de génération.

L'organe commutateur à semi-conducteur commandé est dans la partie de déclenchement du générateur et fonctionne sous la tension basse.

Cet organe peut être constitué par exemple par au moins un transistor ou un thyristor SiC.

L'éclateur est de préférence un éclateur à gaz sans élément radioactif.

On conçoit alors que le pilotage de l'organe commutateur à semi-conducteur commandé 28 permet de déclencher la décharge du condensateur de déclenchement 26 dans l'enroulement primaire 29 du transformateur 30.

Ce signal de déclenchement est alors converti en une impulsion de faible énergie et à haute tension au secondaire 31 de ce transformateur, ce qui impose alors une surtension à l'éclateur qui permet de déclencher celui-ci et donc de provoquer la décharge du condensateur de puissance 22 dans la bougie 24 et la génération correspondante d'une étincelle.

On conçoit alors qu'en raison du fait que la tension requise pour déclencher l'éclateur à gaz est plus importante que la tension aux bornes du condensateur de puissance, le système ne se décharge qu'à la réception d'un signal de déclenchement.

Dans le générateur selon l'invention, l'éclateur à gaz n'est pas responsable du déclenchement de la décharge du condensateur de puissance de sorte que son seuil de tension de déclenchement n'a pas besoin d'être défini de manière précise.
Par ailleurs, étant donné que l'organe commutateur à semi-conducteur n'a pas à conduire une grande quantité de courant, un organe commutateur en Carbure de Silicium (SiC) tel qu'un transistor ou thyristor par exemple, peut être utilisé pour fermer le circuit de déclenchement. On utilise ainsi par exemple deux sources indépendantes pour la charge des condensateurs 22 et 26, ce qui permet de charger le condensateur 26 plus rapidement (capacité de puisage plus faible), et donc réduire le courant de fuite dans le commutateur 28.

Il est donc possible d'utiliser un commutateur 28 en silicium et fonctionner à température élevée également, mais sans utiliser de composants SiC plus onéreux.

Une telle structure peut alors fonctionner à des températures plus élevées que les générateurs de l'état de la technique, présente des caractéristiques en courant plus élevées que les générateurs connus et présente également une durée de vie accrue en raison du fait que le déclenchement ne dépend plus du vieillissement par exemple de l'éclateur à gaz.

Il va de soi bien entendu que d'autres modes de réalisation encore peuvent être envisagés.

## Revendications

1. Générateur d'allumage à haute énergie notamment pour turbine à gaz, comportant une source d'énergie électrique (20, 21) reliée à des moyens de génération d'étincelles entre les électrodes d'une bougie d'allumage (24), **caractérisé en ce qu'**il comprend une première partie de puissance comportant des premiers moyens formant condensateur de stockage d'énergie (22) en série avec des premiers moyens formant diode (23), dans laquelle les premiers moyens formant condensateur (22) sont également raccordés à la bougie d'allumage (24) à travers un éclateur à gaz (25) et au moins une deuxième partie de déclenchement comportant des seconds moyens formant condensateur de stockage d'énergie (26) en série avec des seconds moyens formant diode (27), dans laquelle les seconds moyens formant condensateur (26) sont raccordés à travers au moins un organe commutateur à semi-conducteur commandé (28), à un enroulement primaire (29) d'un transformateur élévateur de tension (30) dont un enroulement secondaire (31) est raccordé en série avec l'éclateur à gaz (25) entre les premiers moyens formant condensateur (22) et la bougie d'allumage (24).

2. Générateur d'allumage selon la revendication 1, **caractérisé en ce que** l'organe commutateur à semi-conducteur (28) comporte au moins un transistor.

3. Générateur d'allumage selon la revendication 1, **caractérisé en ce que** l'organe commutateur à semi-conducteur (28) comporte au moins un thyristor.

4. Générateur d'allumage selon l'une quelconque des revendications précédentes, **caractérisé en ce que** l'organe commutateur à semi-conducteur (28) basé sur un substrat en carbure de silicium (SiC).

5. Générateur d'allumage selon l'une quelconque des revendications précédentes, **caractérisé en ce que** la source d'énergie électrique (20, 21) est adaptée pour délivrer une tension d'alimentation d'environ 3000 volts pour la première partie de puissance des moyens de génération et d'environ 1000 volts pour la deuxième partie de déclenchement de celui-ci.

6. Générateur d'allumage selon la revendication 5, **caractérisé en ce que** la source d'énergie comporte deux sources d'alimentation indépendantes pour la charge des deux moyens formant condensateur.

7. Générateur d'allumage selon l'une quelconque des revendications précédentes, **caractérisé en ce que** l'éclateur (25) est un éclateur à gaz sans élément radioactif.

## Patentansprüche

1. Hochenergiezündgenerator, insbesondere für eine Gasturbine, der eine elektrische Energiequelle (20, 21) aufweist, die mit Mitteln zur Erzeugung von Zündfunken zwischen den Elektroden einer Zündkerze (24) verbunden ist, **dadurch gekennzeichnet, dass** er ein erstes Leistungsteil aufweist, das erste, einen Kondensator (22) zur Energiespeicherung bildende Mittel in Reihe mit ersten, eine Diode (23) bildenden Mitteln, wobei die ersten, einen Kondensator (22) bildenden Mittel gleichfalls an die Zündkerze (24) über eine Funkenstrecke (25) angeschlossen sind, und mindestens ein zweites Auslöseteil aufweist, das zweite, einen Kondensator (26) zur Energiespeicherung bildende Mittel in Reihe mit zweiten, eine Diode (27) bildenden Mittel aufweist, dass die zweiten, einen Kondensator (26) bildenden Mittel über mindestens ein gesteuertes Halbleiterschaltelement (28) an eine Primärwicklung (29) eines Spannungsaufwärtstransformators (30) angeschlossen sind, dessen Sekundärwicklung (31) in Reihe mit der Funkenstrecke (25) zwischen den ersten, einen Kondensator (22) bildenden Mitteln und der Zündkerzen (24) geschaltet ist.

2. Zündgenerator nach Anspruch 1, **dadurch gekennzeichnet, dass** das Halbleiterschaltelement (28) mindestens einen Transistor aufweist.

3. Zündgenerator nach Anspruch 1, **dadurch gekennzeichnet, dass** das Halbleiterschaltelement (28) mindestens einen Thyristor aufweist.

4. Zündgenerator nach einem beliebigen der vorhergehenden Ansprüche, **dadurch gekennzeichnet, dass** das Halbleiterschaltelement (28) auf einem Substrat aus Siliziumcarbid (SiC) basiert.

5. Zündgenerator nach einem beliebigen der vorhergehenden Ansprüche, **dadurch gekennzeichnet, dass** die elektrische Energiequelle (20, 21) angepasst ist, eine Versorgungsspannung von ungefähr 3000 V für das erste Leistungsteil der Erzeugungsmittel und ungefähr 1000 V für das zweite Auslöseteil derselben zu liefern.

6. Zündgenerator nach Anspruch 5, **dadurch gekennzeichnet, dass** die Energiequelle zwei unabhängige Versorgungsquellen für die Ladung der zwei, einen Kondensator bildenden Mittel aufweist.

7. Zündgenerator nach einem beliebigen der vorhergehenden Ansprüche, **dadurch gekennzeichnet, dass** die Funkenstrecke (25) eine Gasfunkenstrecke ohne radioaktives Element ist.

## Claims

1. A high energy ignition generator notably for a gas turbine, including a source of electric energy (20, 21) connected to means for generating sparks a between the electrodes of an ignition spark plug (24), **characterized in that** it comprises a first power portion including first means forming a capacitor (22) for storing energy in series with first means forming a diode (23), wherein the first means forming a capacitor (22) are also connected to the ignition spark plug (24) through a gas spark gap (25) and at least one second triggering portion including second means forming an energy storage capacitor (26) in series with second means forming a diode (27), wherein the second means forming a capacitor (26) are connected through at least one controlled semiconductor switching unit (28), to a primary winding (29) of a voltage step-up transformer (30) for which one secondary winding (31) is connected in series with the gas spark gap (25) between the first means forming a capacitor (22) and the ignition spark plug (24).

2. The ignition generator according to claim 1, **characterized in that** the semiconductor switching unit (28) includes at least one transistor.

3. The ignition generator according to claim 1, **characterized in that** the semiconductor switching unit (28) includes at least one thyristor.

4. The ignition generator according to any one the preceding claims, **characterized in that** the semiconductor switching unit (28) is based on a silicone carbide (SiC) substrate.

5. The ignition generator according to any one of the preceding claims, **characterized in that** the source (20, 21) of electric energy is adapted for delivering a power supply voltage of about 3,000 volts for the first power portion of the generation means and of about 1,000 volts for the second triggering portion of the latter.

6. The ignition generator according to claim 5, **characterized in that** the energy source includes two independent power supply sources for charging both means forming a capacitor.

7. The ignition generator according to any one of the preceding claims, **characterized in that** the spark gap (25) is a gas spark gap without any radioactive element.
